# EUROPEAN PATENT APPLICATION

(11) **EP 4 817 574 A1**
(43) Date of publication of application: **07.10.2026**
(21) Application number: 25168645.7
(22) Date of filing: 04.04.2025
(51) Int. Cl.: A61G 3/06, B60P 1/43

(54) **PIVOT MECHANISM OF A FOLDABLE RAMP FOR WHEELCHAIR ACCESS TO A PASSENGER CAR REAR DOOR**

(71) Applicant: API CZ s.r.o., 391 76 Slapy (CZ)
(72) Inventor: BARTOS, Miroslav, 39001 Tabor (CZ); HUISL, Marek, 39165 Bechyne (CZ)
(74) Representative: Schmid, Nils T.F.

(57) **Abstract**

The present invention relates to a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position; and a pivot mechanism for pivoting the platform between the transport position and the passive position around a pivot axis extending parallel to a width direction, wherein the pivot mechanism comprises guiding means for defining a trajectory of the pivot axis between the transport position and the passive position so that the platform, when moving between the transport position and the passive position, conducts a rotationally translational movement, characterized in that, the guiding means comprise at least one slide-rail arrangement with defined clearance between the slide and the rail in width direction.

## Description

The present disclosure relates to a foldable ramp system and method for providing wheelchair access to a passenger car rear door. Specifically, the present disclosure pertains to a foldable ramp with a platform that can be arranged in multiple positions and includes a pivot mechanism with guiding means for facilitating rotationally translational movement.

In the field of accessibility solutions for passenger vehicles, it is common to employ ramps to facilitate wheelchair access. Known systems typically involve fixed or detachable ramps that are either permanently installed or manually attached when needed. These systems often require significant manual effort to deploy and store the ramps, which can be cumbersome and time-consuming for users. Additionally, the storage of these ramps can occupy valuable space within the vehicle, limiting the available room for passengers and cargo.

According to known designs, ramps are often constructed with simple hinge mechanisms that allow for basic folding and unfolding. While these designs provide a degree of functionality, they often lack the sophistication needed to ensure smooth operation and ease of use. The mechanisms used in these systems can be prone to wear and tear, leading to maintenance issues and potential safety hazards over time. Furthermore, the alignment and stability of these ramps during use can be inconsistent, posing risks to users, particularly when transitioning from the ground to the vehicle.

Despite the substantial advances in the field of vehicle accessibility, there remains a need for more efficient and user-friendly solutions. Current systems do not adequately address the challenges of integrating ramps into passenger vehicles in a manner that is both space-efficient and easy to operate. The complexity of existing mechanisms can also deter users from utilizing these systems, thereby limiting their effectiveness in promoting accessibility.

It is therefore an object of the present invention to provide an improved foldable ramp for wheelchair access to passenger vehicles that at least partially overcomes the disadvantages of known systems, in particular that is space-efficient and/or easy to operate.

A first aspect of the invention provides a foldable ramp for wheelchair access to a passenger car rear door, comprising: a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a pivot mechanism for pivoting the platform between the transport position and the passive position around a pivot axis extending parallel to a width direction, wherein the pivot mechanism comprises guiding means for defining a trajectory of the pivot axis between the transport position and the passive position so that the platform, when moving between the transport position and the passive position, conducts a rotationally translational movement, wherein the guiding means comprise at least one slide-rail arrangement with defined clearance between the slide and the rail in width direction.

In this context, the term "platform" may refer to the main surface of the ramp that supports the wheelchair. The "platform floor" may be described as the structure of the platform via which the wheelchair can access the car, while the "platform side walls" are the vertical components that extend from the platform floor, providing structural support, additional functionality and/or avoiding that a wheelchair unintentionally leaves the platform floor. The term "foldable" particularly indicates that the ramp can be folded into the car, in particular into the transport position and/or the passive position, in particular in that the tailgate of a car can be closed without removing he foldable platform from the car, in other words that the ramp can be collapsed or extended as needed for use or storage.

A pivot mechanism as used herein is preferably designed in that the translational part of the rotationally translational movement between the transport position and the passive position comprises a movement in vertical direction, in particular in that a pin of a pin-groove arrangement, in particular the pin groove arrangement as described below, moves in vertical direction. Preferably, when moving from the passive position into the transport position, the pin moves in gravitational direction, in particular by at least 50 mm, 80 mm, 100 mm or 120 mm, preferably by at least 150 mm, 160 mm, 170 mm, 180 mm or 190 mm, for example by 192,5 mm. This brings the platform closer to the floor thereby allowing the ramp to accommodate a lower angle between platform and ground, when the platform is in entry position, which in turn makes it easier for the wheelchair to access the car. On the other hand, the movement of the pin opposite to the gravitational direction, when moving the platform from the transport to the passive position, allows implementing the ramp into cars with high floor well.

In the entry position, the platform may be oriented at an angle between 5° and 30°, preferably between 5° and 20°, more preferably between 5° and 15°, even more preferably between 10° and 15°, most preferably between 10° and 12°, relative to the horizontal. If the angle is higher than 15°, it becomes unconvenient to enter the car on the wheelchair. Due to such an orientation of the platform during access of the wheelchair, the wheelchair may easily and smoothly access the interior of the passenger car. For example, the length of the ramp in a length direction is larger than 20 cm and preferably less than 5 m, preferably between 50 cm and 2 m. The platform may further be arranged in a transport position, i.e. a position in which a wheelchair has accessed the interior of the passenger car via its rear door and in which the passenger car may be driven while the wheelchair and the platform are stored in the back of the passenger car. In the transport position, the entry platform may be oriented in an upright position, particularly in a vertical position. It is clear, that in the transport position, the platform shall preferably have a length which is less than a vertical dimension of the passenger car, in particular a vertical dimension of the back of the passenger car. In an advantageous embodiment of the invention, the platform may be provided with a profiled upper surface and/or an anti-slip coating in order to facilitate use of the foldable ramp even in bad weather conditions, such as rain and/or snow, and/or to prevent the wheelchair from sliding backwards and/or sideways when accessing the passenger car rear door. Also, the platform may be arranged in a passive position in which the entry platform is provided in the passenger car in a lying position. The term "platform" as used herein may be interchangeably used with the term "entry platform".

A pivot mechanism as used herein may be employed to transition the platform between the transport and passive positions. This mechanism may pivot around an axis that runs parallel to the width of the platform. The pivot mechanism may be equipped with guiding means that define the path of the pivot axis during the transition, ensuring that the platform undergoes a combined rotational and translational movement.

The term "width" of the platform floor may refer to its extension in width direction. The "width direction" may refer to the direction defining the space between two side walls of the platform or the direction defining the space between two wheels of the same axis of the passenger car. The "length" of the platform floor may refer to the extension of the platform in length direction. The "length direction" may refer to the direction a wheelchair moves when it accesses the car or to the direction defining the space between wheels of different axis of the passenger car. The "thickness" of the platform floor as used herein may refer to its extension in thickness direction of the platform. The "thickness direction" may refer to the direction extending orthogonal to a plane defined by the width direction and the length direction.

The guiding means may comprise a least one slide-rail arrangement, which includes a defined clearance between the slide and the rail in the width direction. This allows for precise control of the platform's movement, ensuring smooth and reliable operation. The slide-rail arrangement with defined clearance contributes to the stability and ease of movement, making the ramp both user-friendly and durable. The defined clearance of the slide-rail arrangement may be realized by using a slide-rail arrangement with a rail having a cavity with t-shaped cross section, which may also be referred to as "T-slot profile" and a slide with t-shaped cross section, wherein the t-shaped cross section of the slide and of the cavity of the rail correspond to each other, e.g. have substantially the same dimensions despite a defined clearance , e.g. for allowing smooth movement of the slide in the rail. For example, the defined clearance may be between 0 mm and 10 mm, preferably between 0,05 mm and 5 mm, more preferably between 0,1 mm and 2 mm, even more preferably between 0,15 mm and 1 mm, most preferably between 0,2 mm and 0,5 mm. The expression "defined clearance" as used herein, in particular as used with respect to the first and second aspect of the invention, may alternatively be phrased as "play", "sliding play", "freedom of movement", "mounting play", "moving space" or "space" or "air gap" between the slide and rail / pin and groove in width direction, in particular in mounted state. The clearance may be realized in that the dimension of the slide corresponding to the dimension of the cavity in the rail, for example the "top" or "crossbar" of the "T" and/or the "leg" or the "longitudinal bar" of the "T", is smaller by a defined clearance, e.g. the previously defined ranges. The advantages of this design include a compact and efficient mechanism for moving the ramp between different positions, reducing space requirements and complexity. The use of a T-slot profile for the slide-rail arrangement further enhances the compactness and ease of manipulation of the ramp. This design also allows for better force distribution in the joints, making it easier to balance the ramp during use.

Preferably, the rail of the slide-rail arrangement is connected, in particular fixedly connected, to a platform sidewall of the platform protruding from a platform floor of the platform, preferably wherein the platform sidewall and the platform floor are separate parts and/or the platform side wall is an extrusion profile and/or comprises a slot, in particular a slot on the top of the side wall, via which the rail is connected to the platform sidewall.

Preferably the platform comprises two platform side walls being separate parts with respect to each other and with respect to the platform floor. In other words, the platform preferably comprises at least three separate parts, namely two platform side walls and one platform floor. It should be clear that all features and embodiments described above and below with respect to at least one platform side wall may apply mutatis mutandis to embodiments with two platform side walls. Particularly preferred, the platform side walls are spaced from each other in a width direction.

The term "separate parts" as used herein may interchangeably be used with "distinct parts", "parts being not integrated into a single piece" and "parts being manufactured and/or, preferably and, assembled as individual parts". The advantage of having the platform side wall and platform floor as separate parts lies in particular in the flexibility and functionality it offers. By constructing the side walls as separate components, preferably using an extrusion process for the side walls, the design can incorporate additional features such as LED lights or T-slot rails. This separation also eliminates the need for edge protections on sharp alloy sheet edges, as the edges of the platform floor can be covered by a notch in the extruded side wall. This design not only enhances the functionality of the ramp but also improves safety and ease of use.

Preferably, the platform floor comprises, in particular consists of, a sheet, in particular a metal sheet, more in particular an aluminum sheet. The term sheet, as used herein, may be interchangeably used with the term "plate" or "sheeting". A "sheet" within the meaning of the present disclosure can refer to a flat piece of material, in particular metal, more in particular aluminum. The term "flat piece" or "sheet" as used herein may refer to a structure having a small thickness compared to its width and length. For example, a sheet may refer to a structure having a thickness of less than 10 %, 8%, 6%, 5%, 4%, 3%, 2% or 1% of the smaller one of its length and width. For example, the ramp floor may have a length of 2,0 meter, a width of 1,5 meter and a thickness of 10 mm.

In a preferred embodiment the top of the side wall carries a light source and/or a rail of a slide-rail arrangement of a pivot mechanism of the foldable ramp. Preferably, the light source and/or the rail of a slide-rail arrangement are connected to the platform side wall via a slot in the top of the platform side wall, in particularly a slot comprising a cavity and a slit allowing access from the cavity to the outside of the platform side wall and vice versa. Preferably, the platform side wall comprises a light source carrying part extending from the end of the platform side wall facing (when the platform is in entry position) the street to a slide-rail arrangement carrying part extending from the light source carrying part to the end of the platform facing (when the platform is in entry position) the car. Preferably, the light source is located at, preferably in, the top of the light source carrying part of the platform side wall and/or the slide-rail arrangement is located at the top of the slide-rail arrangement carrying part of the platform side wall.

The slide of the slide-rail arrangement is preferably connected, in particular rotatably connected, to a bridge, in particular a bridge side wall. A "bridge" as used herein particularly serves to, e.g. is designed to, connect the platform to a passenger car, in particular to rotatably connect the platform to the passenger car, in particular in that the platform can rotate from the transport position into the entry position and vice-verse, in particular by means of a pure rotational movement. Preferably, the previously and subsequently described pivot mechanism is designed to define the translational rotational movement of the platform from the passive position into the transport position and vice versa, while the bridge is designed to define the rotational movement of from the transport position to the entry position and vice versa. Preferably, the pivot mechanism defines the translational rotational movement from the passive position into the transport position and vice versa as a relative movement between the bridge and the platform, particularly preferred as a movement of the platform while the bridge does not move. For this purpose, the pivot mechanism preferably comprises a slide-rail arrangement, e.g. the previously and subsequently described slide-rail arrangement the rail of which is fixedly connected to the platform while the slide can move longitudinally relative to the platform along the rail while being connected to the bridge, in particular to a side plate of the bridge, e.g. rotationally connected to the side wall of the bridge but not translationally movable with respect of the sidewall of the bridge. This can be realized for instance by means of a pin protruding from the slide and being connected to the side plate of the bridge by means of a bearing, in particular a roller bearing.

In addition to the slide-rail arrangement, the pivot mechanism can comprise a pin-groove arrangement which will be described in detail below, in particular with respect to the second and third aspect of the present invention. The pin groove arrangement can be realized in that the groove is fixedly connected to the bridge, e.g. to a side plate of the bridge, preferably to the same side plate of the bridge carrying the pin of the slide of the slide-rail arrangement. The Pin of the pin-groove arrangement can be connected, in particular fixedly connected, to the platform, in particular to a platform side wall, in particular to the same platform side wall carrying the rail of the slide-rail arrangement. Thereby, the pin of the pin groove arrangement may be not movable in rotational and/or translational direction relative to the platform but translationally and preferably rotationally movable relative to the bridge, in particular along the groove of the bridge side plate.

Preferably, the foldable ramp is designed in that, between the transport position and the entry position, the pivot mechanism is in locked state, e.g. blocking a relative movement between the bridge and the platform.

In an implementation of the foldable ramp according to the first aspect, the rail delimits in thickness direction from both sides at least one, preferably two, slide guiding section, wherein the slide comprises at least one, preferably two, slide section protruding into the at least one slide guiding section, wherein the difference in thickness of the slide guiding section and the slide section defines the clearance between the slide and the rail. This particularly ensures that the slide is guided within the rail with a defined clearance, allowing for smooth and controlled movement and enhancing the guiding precision and stability of the platform's movement. By having the rail delimit in thickness direction from both sides and the slide protruding into the guiding section, the system ensures that the platform remains securely guided within the rail, reducing the risk of misalignment or jamming during operation. This contributes to the overall reliability and safety of the foldable ramp, making it more efficient and user-friendly for wheelchair access to the passenger car rear door. The defined clearance between the slide and the rail also allows for some flexibility in the movement, accommodating minor variations and ensuring consistent performance over time. The difference in thickness may be between 0 mm and 10 mm, preferably between 0,1 mm and 8 mm, more preferably between 0,2 mm and 5 mm, even more preferably between 0,5 mm and 3 mm, most preferably between 1 mm and 2 mm. The thickness of the at least one slide section and the at least one slide guiding section may refer to the extension of the at least one slide section and the slide guiding section in width direction of the platform, in particular of the platform side wall. A slide guiding section as used herein can be a section of a cavity of the rail. Preferably, two slide section are provided extending on opposite sides of a slide leg, wherein the two slide sections form the "top" or cross bar of a T-shaped cross section of the slide. Additionally or alternatively, two slide guiding sections are provided on opposite sides of a slide guiding leg, wherein the two slide guiding sections form the "top" or cross bar of a T-shaped cross section of the rail, e.g. of a cavity of the rail.

In a further implementation of the foldable ramp according to the first aspect, the slide-rail arrangement defines a sliding axis along which the slide and the rail are longitudinally movable relative to each other, wherein the slide and/or a slide channel delimited by the rail comprises a T-shaped cross section in a cross section extending orthogonal to the sliding axis. This longitudinal movement is facilitated by the structural design of the slide and/or the slide channel, which is delimited by the rail. The slide and/or the slide channel possess a T-shaped cross section when viewed in a plane orthogonal to the sliding axis. This T-shaped cross section enhances the stability and alignment of the sliding mechanism, ensuring smooth and controlled movement along the sliding axis. The T-shaped design likely provides a broader surface area for contact between the slide and the rail, reducing the risk of derailment and improving the overall robustness of the mechanism. Additionally, the T-shaped cross section may help in distributing the load more evenly across the slide and rail, thereby enhancing the durability and longevity of the ramp system. Preferably, the extension of the slide orthogonal to the cross-section is larger, in particular 100%, 200% or 300 % larger than the largest extension of the cross-section, in particular of the "top" or "cross bar" of the T-shaped cross section. Additionally or alternatively the extension of the "top" or "cross-bar" is larger, in particular 100%, 200% or 300 % larger than the extension of the "leg" or "longitudinal bar" of the T-shaped cross section. The previously described dimensions enhance the stability and alignment of the sliding mechanism, ensuring smooth and controlled movement along the sliding axis. Preferably, the slide comprises a pin being connected, in particular rotationally connected to the bridge, in particular to a side plate of the bridge.

Preferably, the foldable ramp comprises a load measurement arrangement comprising a deformation element which is elastically deformed when the platform is loaded and a sensor for indirectly measuring the load by measuring the deformation of the deformation element. The deformation element is preferably hollow cylindrically shaped, preferably hollow cylindrically shaped and/or made of polyurethan, and preferably surrounds the previously described bin being connected to the slide. The pin is preferably surrounded by a rotational bearing, in particular of rotational bearing being mounted in the side plate of the bridge. Preferably, the deformation element is designed to be elastically deformed by at least 0,1 mm, more preferably at least 0,2 mm or 0,3 mm, when the platform is loaded with 70 kg. For example, the deformation element is designed to be deformed by at least 0,1 mm, preferably at least 0,2 mm, 0,3 mm, 0,4 mm, 0,5 mm, 0,6 mm or 0,7 mm, when a person in a wheel chair, in particular with a total weight of 70 kg, is in the middle, in particular in length and width direction, of the platform. A deformation of the deformation element being indicated in mm is in particular to be understood as the movement of a point of the deformation element, for example the axis of a pin, in particular a pin of a mounting, e.g. a rotational bearing, being surrounded by the deformation element. Preferably, the deformation of the deformation element causes a distance between two measuring points to increase when the platform is loaded, in particular loaded with at least 70 kg. Particularly preferred, the deformation element is part of a mounting for transferring weight forces from the platform to a bridge of the foldable ramp, wherein a part of the mounting, in particular a pin of the bearing, follows the deformation, in particular of at least 0,7 mm, when the platform is loaded with 70 kg, so that the pin moves at least 0,7 mm, in particular in that the distance of the pin to a second measuring point, in particular a probe not following the deformation of the deformation element, increases by the traveling distance of the pin. Preferably, the change in distance is measured by the sensor, which can be implemented for example as hall sensor or capacity sensor, for measuring the change in distance between the two measuring points.

In a further implementation of the foldable ramp according to the first aspect, the rail is fixedly connected to the platform, in particular to a platform side wall, more in particular on a platform sidewall, and/or the slide is rotatably connected to a bridge, in particular a bridge side plate, of the foldable ramp. This fixed connection ensures that the rail maintains a stable and secure relationship with the platform, providing a reliable guide for the slide's movement. The fixed connection of the rail to the platform sidewall contributes to the overall stability of the ramp when transitioning between different positions, such as the entry, transport, and passive positions. Additionally, the slide is rotatably connected to a bridge, which may be specifically attached to a bridge side plate of the foldable ramp. This rotatable connection allows the slide to pivot relative to the bridge, facilitating the rotationally translational movement of the platform as it transitions between the transport and passive positions. The rotatable connection of the slide to the bridge side plate provides a degree of freedom that accommodates the defined clearance between the slide and the rail in the width direction, as described in the independent claim. This clearance ensures smooth and controlled movement of the platform, preventing binding or jamming that could occur if the components were too tightly constrained.

A second aspect of the invention, which can be combined with the first aspect of the invention and the embodiments described in combination therewith and vice versa, provides a foldable ramp, in particular according to any of the preceding claims, for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a pivot mechanism for pivoting the platform between the transport position and the passive position around a pivot axis extending parallel to a width direction, wherein the pivot mechanism comprises guiding means for defining a trajectory of the pivot axis between the transport position and the passive position so that the platform, when moving between the transport position and the passive position, conducts a rotationally translational movement, wherein the guiding means comprise a pin-groove arrangement with a bushing arranged between the pin and the groove defining a clearance between the pin and the groove, in particular in width direction. This ensures smooth and controlled movement of the platform. The pin-groove arrangement with a bushing provides precise control over the movement, reducing wear and tear and potentially increasing the longevity of the ramp. Additionally, the clearance defined by the bushing allows for slight adjustments and compensations for any misalignments, contributing to the overall reliability and ease of use of the ramp system.

The term "bushing" as used herein can be interchangeably used with "liner", "sleeve" or "bearing bush". The width direction is preferably the direction extending parallel to the pin and/or parallel to the width direction of the platform. The bushing is preferably fitted to the pin in that clearance between the bin and the bushing in width direction is avoided. For this purpose, the bushing can be pressed or screwed onto the pin. While a relative movement between bushing and pin in width direction may be avoided / prohibited, the bushing and the bin may be rotatable relative to each other. This may for example be realized by a roller bearing, such as a needle bearing. The clearance between the pin and the groove my in particular be defined by a clearance between the busing and a side plate, in particular a side plate of a bridge, carrying the groove. For this purpose the bushing may comprise shoulders extending on both sides of the groove parallel to the groove carrying structure, in particular to a side plate of a bridge, in particular the side plate of the bridge described above and below. The clearance between the pin and the groove may in particular be defined by the space between the shoulders of the bushing minus the extension of the groove carrying structure in width direction, e.g. the thickness of the side plate of the bridge. The clearance between pin and grove, in particular between bushing and groove carrying structure, may be between 0 mm and 10 mm, preferably between 0,1 mm and 8 mm, more preferably between 0,2 mm and 5 mm, even more preferably between 0,5 mm and 3 mm, most preferably between 1 mm and 2 mm.

In a first implementation of the foldable ramp according to the second aspect, the bushing comprises a hollow cylindrical section extending between the pin and the groove, and one shoulder on each side of the groove extending substantially parallel to a groove carrying plate, in particular to the side plate of the bridge, wherein the difference between the thickness of the groove carrying plate and the space between the two shoulders in width direction defines the clearance between the pin and the groove. This brings a more precise and controlled movement of the platform by ensuring that the clearance is accurately defined, thereby enhancing the stability and reliability of the pivot mechanism. The hollow cylindrical section of the bushing provides a smooth interface between the pin and the groove, reducing friction and wear, while the shoulders on each side of the groove ensure that the platform remain securely guided along its intended path. Preferably, the shoulders are ring shaped. Particularly preferred the shoulders extend parallel to each other in particular protrude from the hollow cylindrical section in radial direction outwards. In a preferred embodiment, one of the shoulders additionally extends from the hollow cylindrical section in radial direction partially inwards, in particular abuts against a bearing, in particular a roller bearing located between the bushing and the pin. In this example, the pin preferably comprises a shoulder on the opposite side of the bearing, in particular wherein a space in width direction, which preferably matches with the axial direction of the hollow cylindrical section, between the shoulder of the pin and the bearing and/or between the shoulder of the bushing and the bearing defines the clearance between bushing an pin in width direction, which may be between 0 mm and 10 mm, preferably between 0,1 mm and 8 mm, more preferably between 0,2 mm and 5 mm, even more preferably between 0,5 mm and 3 mm, most preferably between 1 mm and 2 mm. Additionally or alternatively, the hollow cylindrical section may have an outer diameter which is equal or smaller than the width of the groove, wherein the width of the groove is preferably defined by its extension orthogonal to the path of the pin in the groove and orthogonal to the thickness of the groove carrying plate, in particular wherein the difference between the width of the groove and the inner diameter of the hollow cylindrical section of the bushing defines the clearance between the pin and the groove in radial direction, wherein the clearance in radial direction is preferable between 0 mm and 10 mm, preferably between 0,1 mm and 8 mm, more preferably between 0,2 mm and 5 mm, even more preferably between 0,5 mm and 3 mm, most preferably between 1 mm and 2 mm. In this regard, radial direction particularly refers to the radial direction with respect to the pin, in particular pin axis.

Preferably the bushing and/or the groove carrying plate comprise or consist of plastic, in particular of polyamide. Particularly preferred the bushing and the groove carrying plate comprise or consist of the same material, in particular plastic, more in particular polyamide. This particularly reduces friction between the bushing and the groove carrying plate.

In a further implementation of the foldable ramp according to the second aspect, at least a part of the bushing comprises a U-shaped cross section. The U-shaped cross section of the bushing can provide several advantages, such as improved stability and alignment of the pin within the groove, potentially reducing wear and tear by distributing forces more evenly across the contact surfaces. Additionally, the U-shaped design might facilitate smoother movement of the platform by minimizing friction and allowing for more precise control over the platform's trajectory. The U-shaped cross section may also contribute to a reduction in noise and vibration during the platform's movement, enhancing the overall user experience. In particular, when cutting in radial direction through the pin and the bushing, the bushing has, in radial direction on both sides of the pin, a u-shaped cross section, wherein the legs of the u-shaped cross sections extend in radial direction parallel to the groove carrying plate, in particular form the shoulders, more in particular the ring shaped shoulders, described above. As described above, the clearance between pin and groove can be defined in width direction and/or in radial direction. The clearance in radial direction may be realised between the bushing and the pin or between the bushing and the groove carrying plate. The clearance in width direction may be realised between the shoulders of the bushing and the groove carrying plate or between a shoulder of the bushing and a bearing between bushing and pin or between a shoulder of the pin a bearing between bushing and pin.

In a further implementation of the foldable ramp according to the second aspect, the pin-groove arrangement comprises a rotational bearing, in particular a roller bearing, arranged between the bushing and the pin. The integration of the rotational bearing within the pin-groove arrangement provides a significant advancement in the mechanical design, ensuring that the clearance between the pin and the groove in the width direction is maintained with higher precision. The roller bearing's presence between the bushing and the pin also provides that the forces exerted during the pivoting motion are more evenly distributed, thereby minimizing localized stress points and potential deformation of the components.

In a further implementation of the foldable ramp according to the second aspect, the pin is connected to the platform, in particular to a platform side wall and/or the groove is incorporated into the bridge, in particular into a bridge side plate. By connecting the pin directly to the platform and integrating the groove into the bridge, the design ensures a more secure and guided movement of the platform, reducing the likelihood of misalignment or mechanical failure. This configuration also simplifies the assembly and maintenance of the ramp, as the components are strategically positioned to support the platform's movement effectively. The inclusion of a bushing between the pin and the groove further refines the movement by providing a controlled clearance, which minimizes friction and wear, thereby extending the lifespan of the ramp mechanism.

In a further implementation of the foldable ramp according to the second aspect, the pin is rotatable relative to the groove and connected to the platform, in particular to platform side wall, in particular wherein the connection is realized by a bolt, in particular a fitted bolt, being threaded into a hollow thread of the pin. The rotatable nature of the pin relative to the groove allows for smoother operation and reduces wear and tear on the components, as the rotational movement can be more evenly distributed along the groove. The use of a fitted bolt ensures a snug fit, minimizing any potential play or looseness that could occur during the operation of the ramp. By threading the bolt into a hollow thread of the pin, the connection is not only secure but also allows for easy assembly and disassembly if maintenance or replacement of parts is necessary. This feature also provides a means of adjusting the tension or tightness of the connection, which can be beneficial in maintaining the optimal performance of the ramp over time.

A third aspect of the invention, which can be combined with the first and/or second aspect of the invention and the embodiments described in combination therewith and vice versa, provides a foldable ramp, for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a pivot mechanism for pivoting the platform between the transport position and the passive position around a pivot axis extending parallel to a width direction, wherein the pivot mechanism comprises guiding means for defining a trajectory of the pivot axis between the transport position and the passive position so that the platform, when moving between the transport position and the passive position, conducts a rotationally translational movement, wherein the guiding means comprise a pin-groove arrangement, wherein the groove has an intermediate section extending substantially parallel to the platform in transport position, wherein substantially parallel includes an angle between 0° and 20°. Preferably, the pin groove arrangement is realised as described above, in particular with respect to the second aspect of the present invention, wherein the guiding means may (but do not necessarily) comprise a pin-groove arrangement with a bushing arranged between the pin and the groove defining a clearance between the pin and the groove, in particular in width direction. Preferably, the angle of the intermediate section can be measured by drawing a line between the two end points of the intermediate section and measuring the angle of that line relative to the platform in transport position.

In a preferred embodiment, the intermediate section comprises a curved part, preferably slightly curved part, e.g. having a curvature, in particular an average curvature, with a radius, in particular an average radius, between 100 mm and 300 mm, preferably between 150 mm and 250 mm, more preferably between 170 mm and 200 mm, e.g. 186 mm. The angle of the curved part relative to the platform in transport position is preferably between 0° and 20 °, more preferably between 4 ° and 15° degree, most preferably between 8° and 13°, e.g. 10°. The angle of the curved part of the intermediate section can be measured preferably by drawing a line between the two end points of the curved part and measuring the angle of that line relative to the position of the platform in transport position. Particularly preferred, the curved part has a constant curvature. However, the curvature may also be variable, in particular decrease along the direction along which the pin moves when moving from the transport position into the passive position. Preferably, the curved part of the intermediate section has a length of between 20 mm and 100 mm, more preferably between 30 mm and 90 mm, even more preferably between 40 mm and 80mm, most preferably between 50 mm and 70 mm. This curved part of the intermediate section has proven to be a good compromise between the ramp folding force and at the same time limiting the horizontal move of the guiding pin as much as possible. Ideally the shape of the intermediate part should be a vertical line, but this would cause ramp jamming during folding. The curved section prevents the ramp jamming. Making the radius small would be great for ramp operational force and avoid of ramp jamming but the ramp would have too large travel in horizontal position and would get into collision with actuators located on the rear plate of the bridge and also with the bridge in the top position. This could lead to a point that the groove would need to have closing geometry, and the ramp would jam again. Thus, preferably, the complete groove has an opened geometry from start to finish. The curved part preferably starts at a ramp angle of 21° and ends at a ramp angle of 53°, wherein a ramp angle of 0° preferably relates to the position of the ramp in transport position, while a ramp angle of 90° preferably relates to the position of the ramp in passive position.

Particularly preferred, the intermediate section comprises a linear part, e.g. a part with substantially no curvature, e.g. a perfectly straight part or a part with a curvature of a radius with at least 400 mm, 600 mm 800 mm, 1000 mm, 2000 mm or 5000 mm. Preferably, the linear part has an angle relative to the platform in transport position between 0° and 20 °, more preferably between 1° and 10° degree, most preferably between 2° and 5°, e.g. 3°. Preferably, the linear part has a length of between 5 mm and 50 mm, more preferably between 10 mm and 40 mm, even more preferably between 15 mm and 35 mm, most preferably between 20 mm and 30 mm. The linear part preferably starts at a ramp angle of 21° and ends at a ramp angle of 53°, wherein a ramp angle of 0° preferably relates to the position of the ramp in transport position, while a ramp angle 90° preferably relates to the position of the ramp in passive position. The inventors have found that the linear section allows further folding of the ramp while avoiding collisions with the bridge with only having a minimal risk of ramp jamming in this section.

In a particular preferred embodiment, the intermediate section comprises a curved part and a linear part, in particular the previously described curved part and linear part, preferably wherein, when the pin moves from the transport position into the passive position, the pin first moves along the curved part and than along the linear part. In such embodiment, the angle between the intermediate section and platform in transport position can preferably be measured by drawing a line between the end point of the curved part facing away from the linear part and the end point of the linear part facing away from the curved part. In such embodiment, the angle of the intermediate part relative to the platform in transport position is preferably between 0° and 20 °, more preferably between 2 ° and 15° degree, most preferably between 5° and 10°, e.g. 8°.In an implementation of the foldable ramp according to the third aspect, the term "substantially parallel" includes an angle between 0° and 20 °, more preferably between 2 ° and 15° degree, most preferably between 5° and 10°. °.

In a further implementation of the foldable ramp according to the third aspect, the groove has at least one curved section along which, when the platform moves from the passive position into the transport position, the pin moves after moving along the intermediate section, wherein the curvature of the curved section in the position where the pin rests when the ramp is in transport position corresponds to the curvature of a circle with a radius of between 20 and 200 mm, preferably between 30 mm and 150 mm, more preferably between 50 mm and 110 mm, most preferably between 70 mm and 90 mm, e.g. 80 mm. The inventors have found that this geometry reduces the initial force for folding the ramp from transport to passive positions. Preferably, the curved section with such curvature, e.g. 80 cm, ends at about 21° of the ramp angle, wherein a ramp angle of 0° preferably relates to the position of the ramp in transport position, while a ramp angle of 90° preferably relates to the position of the ramp in passive position.

In a further implementation of the foldable ramp according to the third aspect, the intermediate section is arranged between a first and a second curved section being curved in opposite direction, in particular in that, when the platform moves from the passive position to the transport position, the pin starts moving in the first curved section along a path being inclined between 20° and 60°, preferably between 25° and 40, relative to the platform in transport position, which angle reduces until the pin enters the intermediate section, and/or wherein the angle increases again when the pin enters from the intermediate section into the second curved section in particular in that, when the pin reaches the transport position, the angle is between 40° and 90° relative to the platform in transport position, preferably between 50° and 80°, more preferably between 60° and 70°. The inventors have found that such geometry of the first curved section is beneficial as it helps to align the ramp with the bridge to achieve a gap between these parts in transport position and completely align the ramp in passive position with the bridge.

In a further implementation of the foldable ramp according to the third aspect, the pivot mechanism comprises a rotation axis around which the platform is rotatable from the transport position into the entry position and vice versa, wherein, in the transport position, the pin is spaced from the rotation axis in a direction orthogonal to the platform by between 50 mm and 150 mm, preferably between 60 mm and 120 mm, more preferably between 70 mm and 100 mm, most preferably between 80 and 90 mm, and/or in a direction parallel to the platform by between 30 mm and 100 mm, preferably between 40 mm and 90 mm, more preferably between 50 mm and 80 mm, most preferably between 55 mm and 75 mm or between 60 mm and70 mm. This geometry particularly aligns the ramp and the extrusion profile of the bridge and the vehicle floor when the ramp is in entry position and allows smooth and easy entrance for a wheelchair.

In a further implementation of the foldable ramp according to the third aspect, the groove defines the vertical movement, in particular the movement along a direction parallel to the platform in transport position, and the horizontal movement, in particular the movement along a direction orthogonal to the platform in transport position, of the pin when the platform pivots from the passive position to the transport position, wherein the horizontal movement is between 30 mm and 90 mm, preferably between 40 mm and 80 mm, more preferably between 50 mm and 60 mm and/or wherein the vertical movement is between 100 mm and 250 mm, preferably between 120 mm and 200 mm, more preferably between 130 mm and 180 mm, even more preferably between 140 mm and 170 mm, most preferably between 150 mm and 160 mm.

### Brief description of drawings

The invention will be explained in detail by means of the following exemplary drawings showing in
- Fig. 1: a perspective view on a section of a floor of a passenger car and a foldable ramp according to the invention being connected to the passenger car, wherein the foldable ramp comprises a platform in transport position,
- Fig. 2: a perspective view on section A of the foldable ramp shown in Fig. 1,
- Fig. 3: a perspective view on a section of a foldable ramp not according to the first aspect of the invention,
- Fig. 4: a perspective view on a bridge of the foldable ramp shown in Fig. 1,
- Fig. 5: a perspective view on a bridge of a foldable ramp not according to any of the first to the third aspect of the present invention,
- Fig. 6: a perspective view on the platform of the foldable ramp shown in Fig. 1,
- Fig. 7: a perspective view on section C of the platform side wall of the platform shown in Fig. 6,
- Fig. 8: a perspective view on section E of the bridge of the foldable ramp shown in Fig. 4, wherein the platform is faded out to show the inside of the bridge,
- Fig. 9: a perspective view on a bridge side plate of a foldable ramp according to the first and second aspect of the invention,
- Fig. 10: a perspective view on a bridge side plate of a foldable ramp not according to the first and second aspect of the invention,
- Fig. 11: a cross-section view on a slide-rail arrangement of a foldable ramp according to the first aspect of the invention,
- Fig. 12: a cross-section view on a pin-groove arrangement of a foldable ramp according to the second aspect of the invention,
- Fig. 13: a side view on a bridge side plate of a foldable ramp according to the third aspect of the invention,
- Fig. 14: a side view on a groove carrying plate not according to the third aspect of the invention,
- Fig. 15: a side view on section D of a foldable ramp shown in Fig. 2, wherein the platform is in transport position,
- Fig. 16: a side view on section D of the foldable ramp shown in Fig. 2, wherein the platform is in an intermediate position between transport position and passive position, and
- Fig. 17: a side view on section D of the foldable ramp shown in Fig. 2, wherein the platform is in passive position.

### Preferred embodiments of the invention

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention. However, it will be apparent to those skilled in the art having the benefit of the present disclosure that the various aspects of the invention claimed may be practiced in other examples that depart from these specific details.

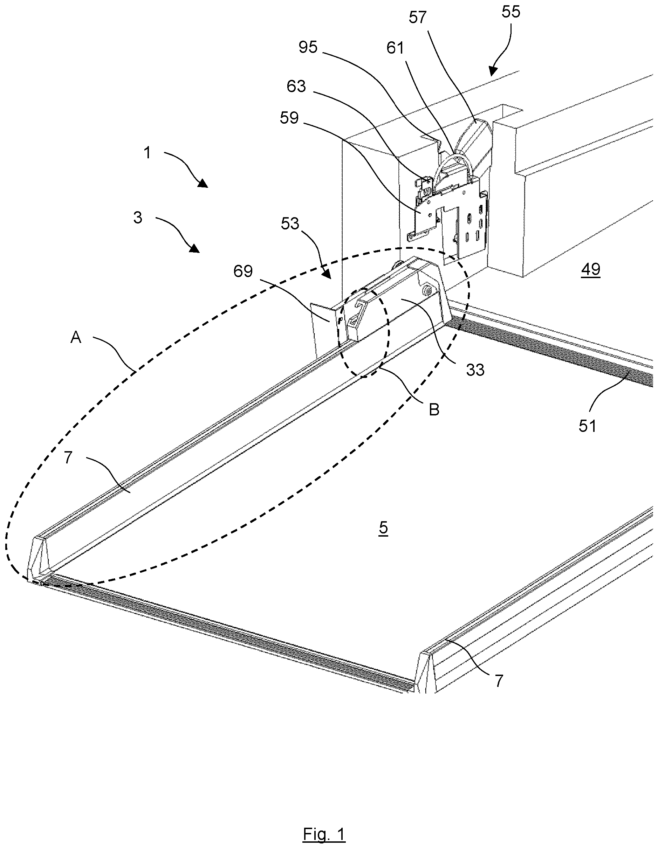

Fig. 1 shows a section of a floor 49 of a passenger car and a foldable ramp 1 for wheelchair access to the passenger car rear door according to the invention. The foldable ramp 1 is connected to the passenger car via a bridge 51, which in Fig. 1 has a corrugated surface to reduce the risk of slippage for a passenger or a wheelchair entering the passenger car from the platform 3 or the platform 3 from the passenger car. The foldable ramp comprises a platform 3 which can be arranged in several positions including an entry position wherein the platform 3 is folded out of the car to allow wheelchair access to the car, a transport position wherein the platform 3 is arranged in the car in an upright position and a passive position wherein the platform 3 is arranged in the car in a lying position. In Fig. 1 the platform 3 is arranged in entry position.

The platform comprises a platform floor 5 and two platform side walls 7 protruding from the platform floor 5. The bridge 51 rotatably connects the platform 3 to the passenger car in that the platform 3 can rotate from the transport position into the entry position and vice-versa. The foldable ramp 1 further comprises a pivot mechanism 53 for transferring the platform between the transport position and the passive position and vice versa by a rotational translational movement. The pivot mechanism 53 is realised at least in part by a rail 33 of a slide-rail arrangement and a bridge side plate 69. The foldable ramp 1 further comprises two locking mechanism 55, one of which is shown in Fig. 1 with a locked state, in which a movement of the platform 3 from the transport position into the passive position is blocked, and a release state, in which the platform 3 can move from the transport position into the passive position. The locking mechanism 55 comprises an electric actuator 57 and is covered by a plate 59. The electric actuator 57, when actuated, pulls a wire 61 which is connected to a locking means 63 for switching between the passive state and the release state. The locking mechanism 55 further comprises an emergency lever 95 for pulling the wire 61 independently from the electric actuator 57.

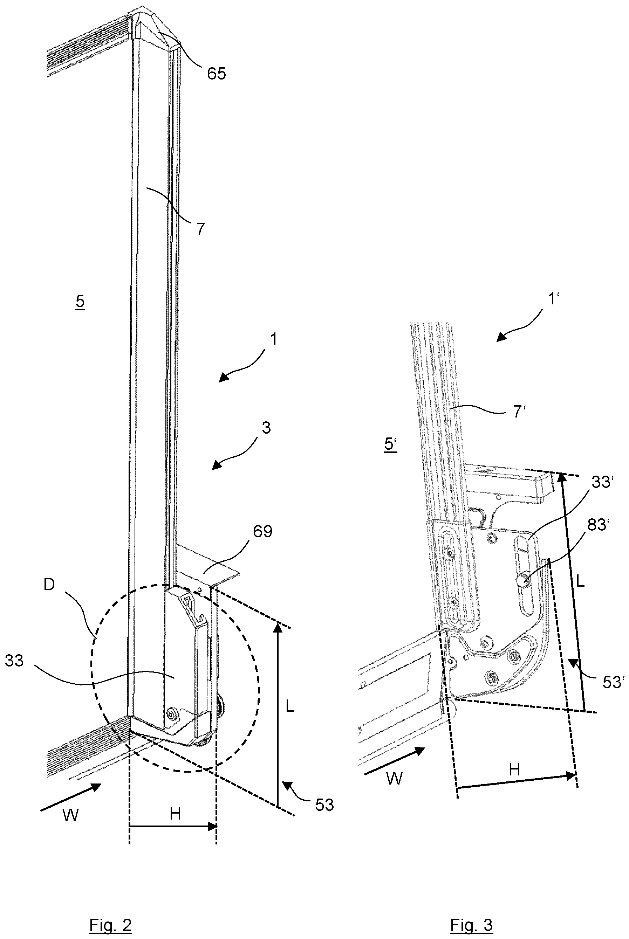

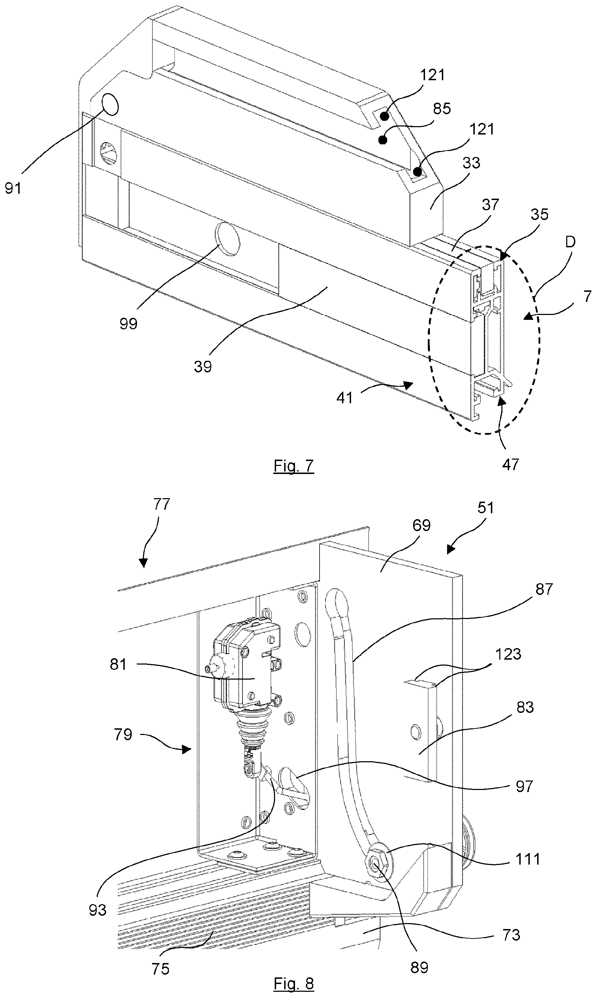

Fig. 2 shows a perspective view on section A of the foldable ramp 1 shown in Fig. 1 with pivot mechanism 53 for pivoting the platform 3 between the transport position and the passive position around a pivot axis extending parallel to a width direction W, wherein the pivot mechanism 53 comprises guiding means for defining a trajectory of the pivot axis between the transport position and the passive position so that the platform, when moving between the transport position and the passive position, conducts a rotationally translational movement. The guiding means comprise a rail 33 housing a slide 83 (not shown in Fig. 2, see Fig. 8) forming a slide-rail arrangement with defined clearance between the slide 83 and the rail 33 in width direction W thereby realizing the first aspect of the invention. Contrary thereto, the foldable ramp 1' in Fig. 3 makes use of a pin 83' guided in a groove 33' without defined clearance in width direction W therefore being not according to the first aspect of the invention. In particular, in Fig. 3, the pin 83' and the groove 33' do not comprise any structures avoiding or restricting relative movement between the pin 83' and the groove 33' in width direction W so that the pin-groove arrangement as such does not provide a defined clearance between pin 83' and groove 33'. The foldable ramp 1' in Fig. 3 comprises a platform with a platform side wall 7' and a platform floor 5' being made from one single part, in particular by bending a metal sheet. As can be seen, the pivot mechanism 53' of the foldable ramp 1' according to Fig. 3 has, compared to the pivot mechanism 53 of the foldable ramp 1 according to Fig. 2, a substantially larger extension of in height direction H and in length direction L. The reduction of extension and thus space saving can be achieved by the idea of making the bridge side wall 7 and bridge bottom 5 as shown in Fig. 2 from separate parts, in particular by using an extrusion profile for the bridge side wall 7 which allows to integrate multiple functions into the side wall thereby obviating the necessity of multiple parts used in the foldable ramp 1' of Fig. 3, in particular it's pivot mechanism 53', and reducing the space requirements for the remaining parts. For example, in Fig.2, the extension of the bridge side plate 69 in height direction H is about 206 mm whereas in Fig. 3, the extension in height direction H is about 230 mm.

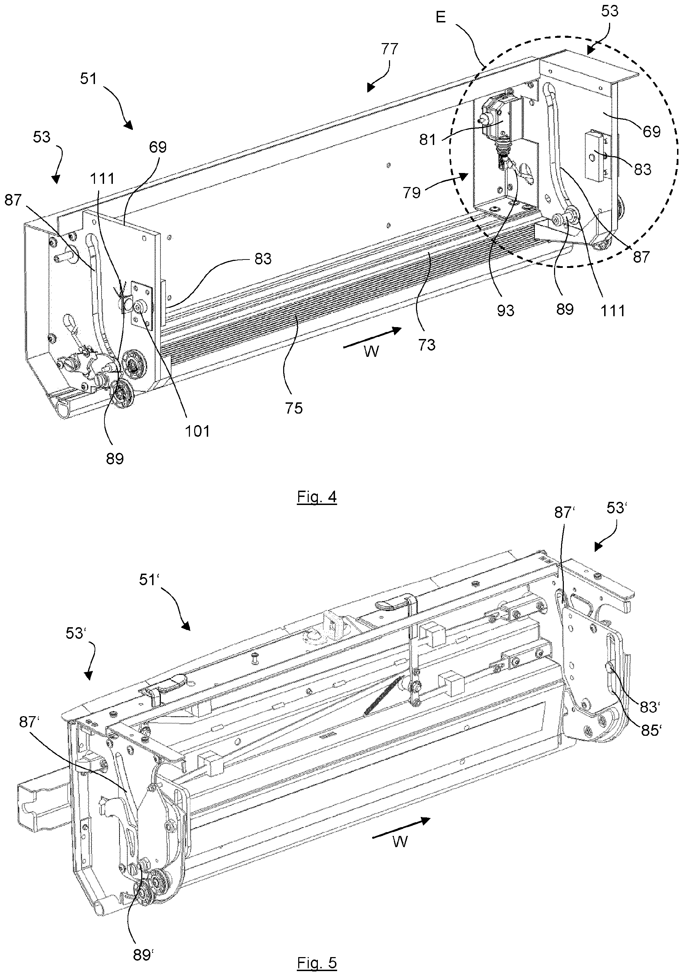

Fig. 4 shows a perspective view on a bridge 51 of the foldable ramp 1 shown in Fig. 1 comprising parts for a pivot mechanism 53 on each side of the foldable ramp 1 in width direction W. Each pivot mechanism 53 comprises slide 83 forming together with the previously mentioned rail 33 a slide-rail arrangement of the respective pivot mechanism. As can be seen, the slide 83 is rotatable connected to a bridge side plate 69 by a rotational bearing 101. Each slide 83 comprises a T-shaped cross section being adapted to a T-shaped cross section of a slide channel 85 (see Fig. 7) in the rail thereby providing a slide-rail arrangement with defined clearance between the slide 83 and the rail 33 in width direction W. Further, each pivot mechanism 53 comprises a pin-groove arrangement with a curved groove 87 being integrated into each bridge side plate 69 and a pin 89 being guided in the curved groove 87. Thanks to a bushing a bushing 111 being arranged between the pin 89 and the groove 87, the pin-groove arrangement has a defined clearance in width direction W. Further components shown in Fig. 4 are described in detail with respect to Fig. 8

Fig. 5 shows a perspective view on a bridge 51' of a foldable ramp not according to any of the first to the third aspect of the present invention. Contrary to Fig. 4, as already described with respect to Fig. 3, the foldable ramp 1' in Fig. 5 makes use of a pin 83' guided in a groove 33' without defined clearance in width direction W therefore being not according to the first aspect of the invention. In particular, in Fig. 5, the pin 83' and the groove 33' do not comprise any structures avoiding or restricting relative movement between the pin 83' and the groove 33' in width direction W so that the pin-groove arrangement as such does not provide a defined clearance between pin 83' and groove 33'. The foldable ramp 1 in Fig. 5 comprises a further pin-groove arrangement with a pin 89' and a curved groove 87 which however also lack structures avoiding or restricting relative movement between the pin 89' and the curved groove 87 in width direction W so that the pin-groove arrangement as such does not provide a defined clearance between pin 89' and the curved groove 87.

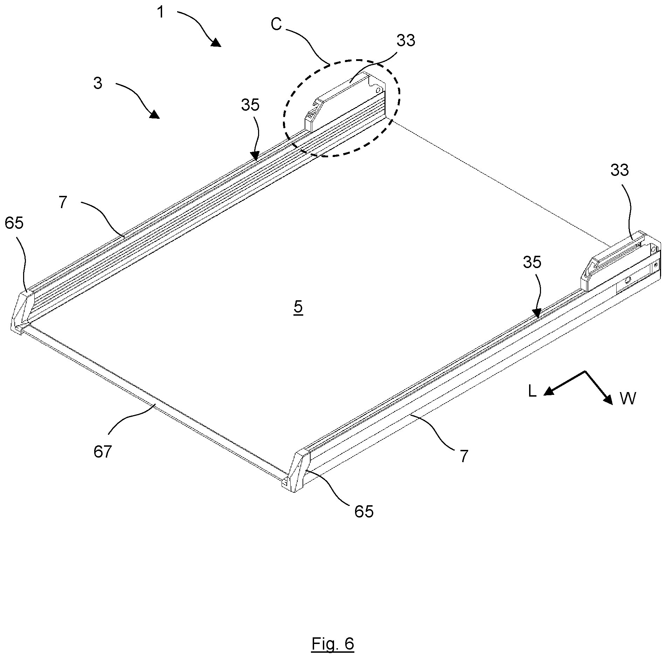

Fig. 6 shows a perspective view on the platform 3 of the foldable ramp shown in Fig. 1. As can be seen, the platform 3 comprises two platform side walls 7 on each side of the platform 3 in width direction W. In Longitudinal direction L on the side facing the passenger car, in particular the bridge 51, a rail 33 of a slide-rail arrangement of the two pivot mechanisms 53 is mounted on the top 35 of the platform side walls 7. In longitudinal direction L on the side facing away from the passenger car, in particular the bridge 51, a cover 65 is provided on each platform side wall 7. The covers 65 can be made of plastic. Further, in longitudinal direction L on the side facing away from the passenger car, in particular the bridge 51, the platform 3 comprises a corrugated surface 67, in particular to reduce the risk of slippage for a passenger or a wheelchair entering the platform. The corrugated surface 67 may be realized by a separate part being connected to the platform side walls 7 and/or the platform floor 5. Preferably, the part comprising the corrugated surface 67 may be connected to the platform floor 5 and to the covers 65 of the platform side walls 7.

Fig. 7 shows a perspective view on section C of the platform side wall of the platform shown in Fig. 6. As can be further seen in Fig. 7, the foldable ramp comprises two light sources 37 and 39, in the form of LED strips, being located at the platform side wall 7. For this purpose, the platform side wall 7 comprises one slot 19 at the top 35 of the platform side wall housing the light source 37 and a slot 25 at the side / outside of the platform side wall 7 housing the light source 39. The slot 19 is further used for connecting the rail 33 of the carrier-rail arrangement of the pivot mechanism 53.

Fig. 8 shows a perspective view on section E of the bridge 51 of the foldable ramp 1 shown in Fig. 4, wherein the platform 3 is faded out to show the inside of the bridge 51. The bridge 51 comprises an extrusion profile 73 with corrugated surface 75, a bridge side plate 69, a bridge rear plate 77, a reinforcing part 79 in form of a steel inlay 79 and an actuator 81 of a further locking mechanism. As previously mentioned, the pivot mechanism comprises a slide-rail arrangement, wherein the rail can be seen for instance in Fig. 7 while the slide 83 can be seen in Fig. 8. The slide 83 has a T-shaped cross section corresponding to a T-shaped cross section of a slide channel 85 in the rail 33 (see Fig. 7) to provide a defined clearance between slide 83 and rail 33 in width direction W. In detail, the rail 33, in particular the slide channel 85, delimits in thickness direction T from both sides by at least one, preferably two, slide guiding section 121 (see Fig. 7), wherein the slide comprises at least one, preferably two, slide section 123 (see Fig. 8) protruding into the at least one slide guiding section 121, wherein the difference in thickness of the slide guiding section 121 and the slide section 123 defines the clearance between the slide 83 and the rail 33.

The bridge side plate 69 further comprises a curved groove 87 in which a pin 89 is arranged translationally movable to provide - in addition to the slide-rail arrangement - a pin-groove arrangement of the pivot mechanism 53. The pin 89 is connected to the platform side wall 7, in particular by a mounting hole 91 (see Fig. 7) of the platform side wall 7. Further, the actuator 81 is connected to a wire 93 for actuating locking means of the further locking mechanism. For allowing to mount the locking means on the opposite side of the bridge side plate 69, the wire extends through an elongated hole 97 of the reinforcing part 79 and through a hole 99 (see Fig. 7) of the bridge side plate 69.

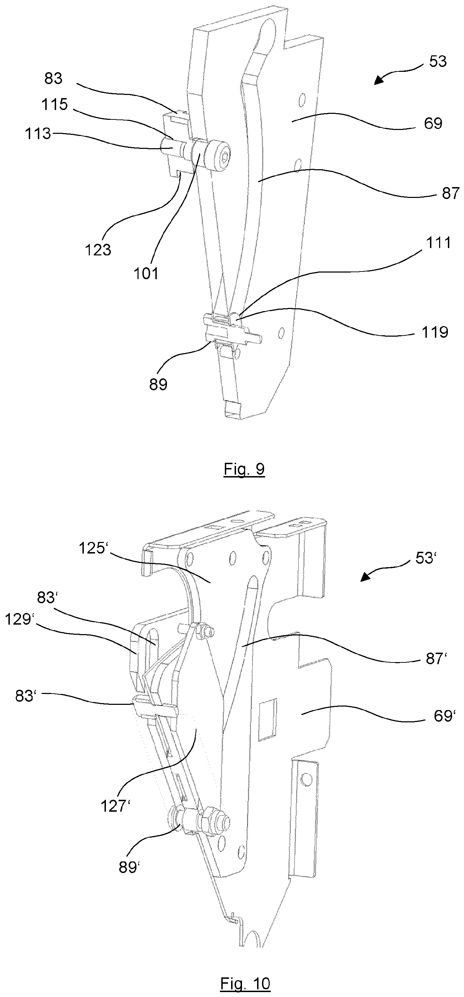

Fig. 9 shows a perspective view on a bridge side plate 69 of a foldable ramp 1 according to the first and second aspect of the invention. As can be seen, the slide 83 can be connected to the bridge side plate 69 by means of a rotational bearing 101, which in the present figure is a roller bearing 101. The roller bearing 101 surrounds a pin 113 protruding through the slide 83 and the bridge side plate 69. In the present case, the pin 113 is part of a screw engaging with a thread inside the slide 83. The pin 89 of the pin groove arrangement is also surrounded by a rotational bearing 115 in form of a roller bearing. The rotational bearing 113 is surrounded by a bushing 111 comprising a hollow cylindrical section 117 extending between the pin 89 and the groove 87, and one shoulder 119 on each side of the groove extending parallel to the bridge side plate 69, wherein the difference between the thickness of the bridge side plate 69 and the space between the two shoulders 119 in width direction W defines the clearance between the slide pin 89 and the groove 87.

Fig. 10 shows a perspective view on a bridge side plate 69' of a foldable ramp 1' not according to the first and second aspect of the invention. As can be seen, due to the missing clearance provided by the pin-groove arrangement and the slide-rail arrangement of Fig. 10, namely by the bushing 111 for the pin-groove arrangement and the T-shape of the slide 83 and the slide channel 85 for the slide-rail arrangement, the pivot mechanism 53' in Fig. 10 requires a plurality of additional plates 125', 127 and 129', namely one groove carrying plate 125' for carrying the groove 87', one groove carrying plate 129' for carrying the groove 85' and one fastening plate 127' for fixing the pins 89' and 83' thereby making the pivot mechanism 53' more complex, more difficult to assemble and requiring a larger mounting space.

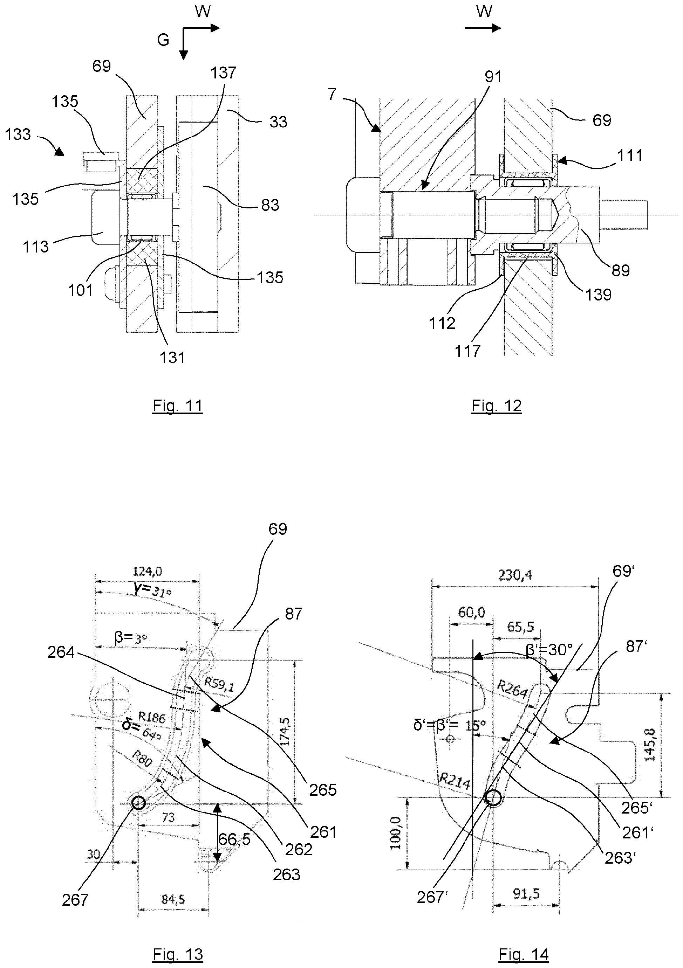

Fig. 11 shows a cross-section view on a slide-rail arrangement of a foldable ramp 1 according to the first aspect of the invention schematically showing examples for the slide 83, the rail 33, the bridge side plate 69, the roller bearing 101 and the pin 113. In Fig. 11 a preferred embodiment is shown in which a load measurment arrangement 131 is mounted on the bridge side plate 69. The load measurment arrangement 131 comprises a deformation element 133 which can be elastically deformed when the platform is loaded and a sensor 135, preferably a capacity sensor or a hall sensor, for indirectly measuring the load by measuring the deformation of the deformation element 133. The deformation element 133 is encased by side plates 135 on both sides of a mounting hole 137 of the bridge side plate 69, to reduce, in particular avoid, evasive deformation of the deformation element 135 when the platform 3 is loaded. In the present case, one of the side plates 135 is used for connecting the sensor 135 to the bridge side plate 69.

Fig. 12 shows a cross-section view on a pin-groove arrangement of a foldable ramp 1 according to the second aspect of the invention schematically showing examples for the bridge side plate 69, the pin 89 of the pin-groove arrangement, the platform side wall 7 and the mounting hole 81 in the platform side wall 7 for connecting the pin 89 thereto. Therein, the pin 89 is surrounded by a rotational bearing 139. The rotational bearing 139 is surrounded by the bushing 111 with a hollow cylindrical section 117 and shoulders 119 on each side of the groove 87 defining a clearance between the groove 87 and the pin 89 in width direction W. In the embodiment shown therein, a screw 141 connects the pin 89 to the platform side wall 7.

As described above, the foldable ramp 1 according to the third aspect may comprises a platform 3 which can be arranged in several positions including an entry position wherein the platform 3 is folded out of the car to allow wheelchair access to the car, a transport position wherein the platform 3 is arranged in the car in an upright position and a passive position wherein the platform 3 is arranged in the car in a lying position, and a pivot mechanism 53 for pivoting the platform 3 between the transport position and the passive position around a pivot axis extending parallel to a width direction W, wherein the pivot mechanism 53 comprises guiding means for defining a trajectory of the pivot axis between the transport position and the passive position so that the platform 3, when moving between the transport position and the passive position, conducts a rotationally translational movement, wherein the guiding means comprise a pin-groove arrangement, wherein the groove 87 has an intermediate section extending substantially parallel to the platform 3 in transport position, wherein substantially parallel includes an angle between 0° and 20. Fig. 13 shows a side view on a bridge side plate 69 of a foldable ramp 1 with a groove 87 having an intermediate section 261 having a curved part 262 with an angle of about 10° relative to the platform in transport position and a linear part 264 with an angle β of 3° relative to the platform in transport position, wherein the complete intermediate part, e.g. from one end of the curved part facing away from the linear part to the an end of the linear part facing away from the curve part, has an angle of about 8° relative to the platform in transport position, i.e. extending substantially parallel to the platform 3 in transport position as required by the third aspect of the invention. Contrary thereto, Fig. 14 shows a side view on a bridge side plate 69' of a foldable ramp with a groove 87' having an intermediate section 261' being inclined by an angle β' of about 30° relative to the platform 3 in transport position, i.e. not extending substantially parallel to the platform 3 in transport position as required by the third aspect of the invention.

The groove 87 in Fig. 13 has a curved section 263 along which, when the platform moves from the passive position into the transport position, the pin moves after moving along the intermediate section, wherein the curvature of the curved section in the position where the pin rests when the ramp is in transport position corresponds to the curvature of a circle with a radius of 80 mm, which is designated in Fig. 13 with R80. Contrary thereto, the corresponding curved section 263' in Fig. 14 has, in the position where the pin rests when the ramp is in transport position, a curvature which corresponds to the curvature of a circle with a radius of 215 mm, which is designated in Fig. 14 with R214.

As can be further seen in Fig. 13, the intermediate section 261 is arranged between a first curved section 265 and a second curved section 263 being curved in the same direction, in particular in that, when the platform moves from the passive position to the transport position, the pin starts moving in the first curved section 265 along a path being inclined by an angle γ of 31° relative to the platform in transport position, which angle γ reduces until the pin enters the intermediate section, and/or wherein the angle increases again when the pin enters from the intermediate section into the second curved section 263 in particular in that, when the pin reaches the transport position, the angle δ is 64°. Contrary thereto, in Fig. 14, the corresponding first curved section 265' and second curved section 263' are curved in the same direction and have the same angle γ' and δ' of 15°. In Figs. 13 and 14, the position of the pin in the platform's transport position is indicated with reference sign 267, 267'. In Fig. 13 the pin is - when the platform is in transport position - spaced from the rotation axis in a direction orthogonal to the platform by 84,5 mm and in a direction parallel to the platform by 66,5 mm. Contrary thereto, in Fig. 14, the pin is - when the platform is in transport position - spaced from the rotation axis in a direction orthogonal to the platform by 91,5 mm and in a direction parallel to the platform by 100 mm.

In Fig. 13 and 14, the groove 87 defines the vertical movement, in particular the movement along a direction parallel to the platform in transport position, and the horizontal movement, in particular the movement along a direction orthogonal to the platform in transport position, of the pin when the platform pivots from the passive position to the transport position, wherein in Fig. 13, the horizontal movement is 73 mm and the vertical movement is 174,5 mm while in Fig. 14 the horizontal movement is 65,5 mm and the vertical movement is 145,8 mm.

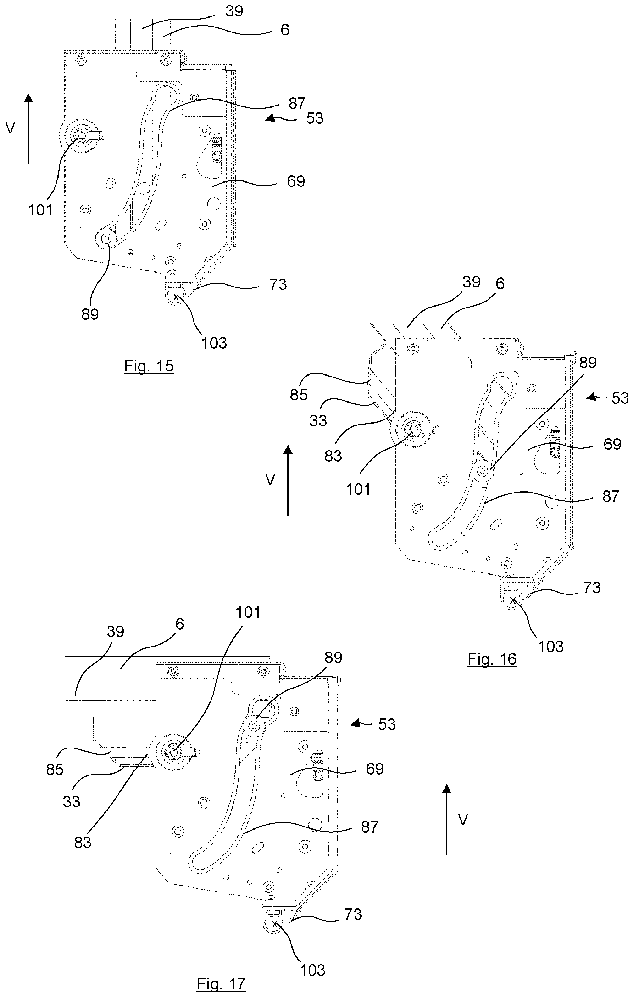

Fig. 15 to 17 show side views on section D of the foldable ramp shown in Fig. 4 to illustrate the functioning of the pivot mechanism 53 of the foldable ramp 1. In particular, Fig. 15 shows the platform 3 in transport position, Fig. 16 shows the platform 3 in an intermediate position between transport position and passive position and Fig. 17 shows the platform 3 in passive position. As can be seen, when the platform moves from the transport position to the passive position, the pin 89 of the pin groove arrangement moves along the curved groove 87. As the curved groove 87 extends in vertical direction V and is implemented in the bridge side plate 69 which does not move between the transport and the passive position, the pin 89 moves in vertical direction V too. As the pin 89 is connected to the bridge side wall 7, the bridge side wall 7 moves in vertical direction V too. In other words, between the passive position and the transport position, the platform 3 conducts not only a rotational movement but also a translational movement allowing, e.g. in total a rotational translational movement. Thanks to the movement in vertical direction V, the platform 3 can be lowered when moving from the passive position to the transport position so that the platform 3 comes closer to the ground from which a wheelchair accesses the platform 3 in entry position. This allows the ramp to be arranged in a less steep angle to the ground making it easier for a wheelchair to access the platform 3. As can further be seen by the comparison of Fig. 15 to 17, when the platform 3 moves from the transport position to the passive position, the slide 83 moves translationally inside the rail 33 thus allowing a further translational movement component of the platform 3. As can be seen in Fig. 15 to 17, the slide 83 is rotatably connected to the bridge side plate 69 by a rotational bearing 101. For moving from the transport position (Fig. 15) into the entry position, the bridge 51 is rotatably mounted around a rotation axis 103 which is defined by a rotation shaft channel 105, which has in the present example a D-shaped cross section, for receiving a rotation shaft (not shown in Fig. 15 to 17).

The features disclosed in the above description, the figures and the claims may be significant for the realization of the invention in its different embodiments individually as in any combination.

### List of Reference Signs:

- 1: Foldable ramp
- 3: Platform
- 5: Platform floor
- 7: Platform side wall
- 19: Slot
- 25: Slot
- 33: Rail
- 35: Top of platform side wall
- 37: Light source / LED strip
- 39: Light source / LED strip
- 49: Floor of passenger car
- 51: Bridge
- 53: Pivot mechanism
- 55: Locking mechanism
- 57: Electric actuator
- 59: Plate
- 61: Wire
- 63: Locking means
- 65: Cover
- 67: Corrugated surface
- 69: Bridge side plate
- 73: Extrusion profile
- 75: Corrugated surface
- 77: Bridge rear plate
- 79: Reinforcing part / steel inlay
- 81: Actuator
- 83: Slide
- 85: Slide channel
- 87: Curved groove
- 89: Pin of pin-groove arrangement
- 91: Mounting hole
- 93: Wire
- 95: Emergency lever
- 97: Elongated hole
- 99: Hole
- 101: Rotational bearing
- 103: Rotation axis
- 105: Rotation shaft channel
- 111: Bushing
- 113: Pin
- 115: Rotational bearing
- 117: Hollow cylindrical section
- 119: Shoulder
- 121: Slide guiding section
- 123: Slide section
- 125': Groove carrying plate
- 127': Fastening plate
- 129': Groove carrying plate
- 131: Load measurment arrangement
- 133: Deformation element
- 135: Side plates
- 137: Mounting hole
- 139: Rotational bearing
- 141: Screw
- 261: Intermediate section
- 262: Curved part of intermediate section
- 263: Second curved section
- 264: Linear part of intermediate section
- 265: First curved section
- 267: Position of the pin when the platform is in transport position
- L: Longitudinal Direction
- H: Height Direction
- W: Width Direction
- T: Thickness Direction
- V: Vertical Direction

## Claims

1. A foldable ramp (1) for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position; and
- a pivot mechanism (53) for pivoting the platform (3) between the transport position and the passive position around a pivot axis extending parallel to a width direction, wherein the pivot mechanism (53) comprises guiding means for defining a trajectory of the pivot axis between the transport position and the passive position so that the platform (3), when moving between the transport position and the passive position, conducts a rotationally translational movement,
**characterised in that,**
the guiding means comprise at least one slide-rail arrangement with defined clearance between the slide (83) and the rail (33) in width direction (W).

2. The foldable ramp (1) according to claim 1, wherein the rail (33) delimits in thickness direction from both sides at least one, preferably two, slide guiding section (121), wherein the slide (83) comprises at least one, preferably two, slide section (123) protruding into the at least one slide guiding section (121), wherein the difference in thickness of the slide guiding section (121) and the slide section (123) defines the clearance between the slide (83) and the rail (33).

3. The foldable ramp (1) according to claim 1 or 2, wherein the slide-rail arrangement defines a sliding axis along which the slide (83) and the rail (33) are longitudinally movable relative to each other, wherein the slide (83) and/or a slide channel (85) delimited by the rail (33) comprises a T-shaped cross section in a cross section extending orthogonal to the sliding axis.

4. The foldable ramp (1) according to any of the claims 1 to 3, wherein the rail (33) is fixedly connected to the platform (3), in particular to a platform side wall (7), more in particular on a platform sidewall, and/or wherein the slide (83) is rotatably connected to a bridge (51), in particular a bridge side plate (69), of the foldable ramp (1).

5. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position, and
- a pivot mechanism (53) for pivoting the platform (3) between the transport position and the passive position around a pivot axis extending parallel to a width direction, wherein the pivot mechanism (53) comprises guiding means for defining a trajectory of the pivot axis between the transport position and the passive position so that the platform (3), when moving between the transport position and the passive position, conducts a rotationally translational movement,
**characterised in that,**
the guiding means comprise a pin-groove arrangement with a bushing (111) arranged between the pin and the groove (87) defining a clearance between the pin and the groove (87), in particular in width direction (W).

6. The foldable ramp (1), according to claim 5, wherein the bushing (111) comprises a hollow cylindrical section (117) extending between the pin and the groove (87), and one shoulder (119) on each side of the groove (87) extending substantially parallel to a groove carrying plate, wherein the difference between the thickness of the groove carrying plate and the space between the two shoulders (119) in width direction (W) defines the clearance between the pin and the groove.

7. The foldable ramp (1), according to claim 5 or 6, wherein at least a part of the bushing (111) comprises a U-shaped cross section.

8. The foldable ramp (1) according to any of the claims 5 to 7, wherein the pin-groove arrangement comprises a rotational bearing, in particular a roller bearing (101), arranged between the bushing (111) and the pin.

9. The foldable ramp (1) according to any of the claims 5 to 8, wherein the pin is connected to the platform (3), in particular to a platform side wall (7) and/or wherein the groove (87) is incorporated into the bridge (51), in particular into a bridge side plate (69).

10. The foldable ramp (1) according to any of the claims 5 to 9, wherein the pin is rotatable relative to the groove (87) and connected to the platform (3), in particular to platform side wall (7), in particular wherein the connection is realized by a bolt, in particular a fitted bolt, being threaded into a hollow thread of the pin.

11. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position; and
- a pivot mechanism (53) for pivoting the platform (3) between the transport position and the passive position around a pivot axis extending parallel to a width direction, wherein the pivot mechanism (53) comprises guiding means for defining a trajectory of the pivot axis between the transport position and the passive position so that the platform (3), when moving between the transport position and the passive position, conducts a rotationally translational movement,
**characterised in that,**
the guiding means comprise a pin-groove arrangement, wherein the groove (87) has an intermediate section (261) extending substantially parallel to the platform (3) in transport position, wherein substantially parallel includes an angle between 0° and 20°.

12. The foldable ramp (1) according to claim 11, wherein the groove (87) has at least one curved section (263) along which, when the platform (3) moves from the passive position into the transport position, the pin moves after moving along the intermediate section, wherein the curvature of the curved section in the position where the pin rests when the ramp is in transport position corresponds to the curvature of a circle with a radius of between 20 and 200 mm, preferably between 30 mm and 150 mm, more preferably between 50 mm and 110 mm, most preferably between 70 mm and 90 mm.

13. The foldable ramp (1) according to one of the claims 11 to 12, wherein the intermediate section is arranged between a first curved section (265) and a second curved section (263) being curved in opposite direction, in particular in that, when the platform (3) moves from the passive position to the transport position, the pin starts moving in the first curved section (265) along a path being inclined between 20° and 60°, preferably between 25° and 40, relative to the platform (3) in transport position, which angle reduces until the pin enters the intermediate section, and/or wherein the angle increases again when the pin enters from the intermediate section (261) into the second curved section (263) in particular in that, when the pin reaches the transport position, the angle is between 40 ° and 90° relative to the platform (3) in transport position, preferably between 50° and 80°, more preferably between 60° and 70°, most preferably 64°.

14. The foldable ramp (1) according to one of the claims 11 to 13, wherein the pivot mechanism (53) comprises a rotation axis (103) around which the platform (3) is rotatable from the transport position into the entry position and vice versa, wherein, in the transport position, the pin is spaced from the rotation axis (103) in a direction orthogonal to the platform (3) by between 50 mm and 150 mm, preferably between 60 mm and 120 mm, more preferably between 70 mm and 100 mm, most preferably between 80 and 90 mm, and/or in a direction parallel to the platform (3) by between 30 mm and 100 mm, preferably between 40 mm and 90 mm, more preferably between 50 mm and 80 mm, most preferably between 55 mm and 75 mm or between 60 mm and70 mm.

15. The foldable ramp (1) according to one of the claims claim 11 and 14, wherein the groove (87) defines the vertical movement, in particular the movement along a direction parallel to the platform (3) in transport position, and the horizontal movement, in particular the movement along a direction orthogonal to the platform (3) in transport position, of the pin when the platform pivots from the passive position to the transport position, wherein the horizontal movement is between 50 mm and 90 mm, preferably between 65 mm and 80 mm, more preferably between 70 mm and 75 mm and/or wherein the vertical movement is between 100 mm and 250 mm, preferably between 140 mm and 220 mm, more preferably between 150 mm and 200 mm, even more preferably between 160 mm and 190 mm, most preferably between 170 mm and 180 mm.
